# NOUVEAU FASCICULE DE BREVET EUROPEEN

(11) **EP 2 134 463 B2**
(45) Date de publication et mention de la décision concernant l'opposition: **27.07.2022**
(45) Mention de la délivrance du brevet: 28.11.2018
(21) Numéro de dépôt: 08775631.8
(22) Date de dépôt: 05.03.2008
(51) Int. Cl.: B01J 19/32, B01D 3/00, B01D 53/18

(54) **GARNISSAGE STRUCTURE HAUTE PERFORMANCE POUR COLONNE DE MISE EN CONTACT DE FLUIDES ET MÉTHODE DE FABRICATION**
STRUKTURIERTE HOCHLEISTUNGSVERPACKUNG FÜR EINE SÄULE MIT FLÜSSIGKEITSKONTAKT UND VERFAHREN ZU IHRER HERSTELLUNG
HIGH-PERFORMANCE STRUCTURED PACKING FOR A FLUID CONTACTING COLUMN AND METHOD OF MANUFACTURE

(30) Priorité: 09.03.2007 FR 0701770
(43) Date de publication de la demande: 23.12.2009
(73) Titulaire: IFP Energies nouvelles, 92500 Rueil-Malmaison (FR)
(72) Inventeur: RAYNAL, Ludovic, F-69600 Oullins (FR); ALIX, Pascal, F-38150 Roussillon (FR)
(74) Mandataire: IFP Energies nouvelles
(86) Numéro de dépôt international: PCT/FR2008/000291
(87) Numéro de publication internationale: WO 2008/132311

(56) Documents cités:
- EP-A- 0 129 272
- EP-A1- 1 029 588
- WO-A-00/24506
- WO-A-91/01178
- WO-A-98/10477
- WO-A-2005/119148
- WO-A-2007/096666
- WO-A2-03/004148
- CN-A- 1 127 675
- DD-A3- 154 153
- DE-A1- 1 501 375
- FR-A1- 2 086 365
- FR-A1- 2 867 697
- US-A- 4 676 934
- US-A- 5 063 000
- US-A- 5 629 258

## Description

La présente invention concerne le domaine des équipements de mise en contacts de fluides.

Les colonnes de mise en contact ont pour but de mettre en contact des fluides afin de réaliser des transferts de matière ou de chaleur entre les fluides. Ce type d'équipement de mise en contact de fluide est largement utilisé pour réaliser des opérations de distillation, de rectification, d'absorption, d'échange de chaleur, d'extraction, de réaction chimique, etc.

Les colonnes de mise en contact sont généralement constituées d'une enceinte cylindrique munie d'éléments de mise en contact interne favorisant l'échange entre les fluides. Dans la colonne, les fluides peuvent circuler à co-courant ou à contre-courant. En général, la colonne permet de mettre en contact intime une phase gazeuse ascendante avec une phase liquide descendante. Les éléments de mise en contact qui augmentent la surface de contact entre les fluides, peuvent être des plateaux, des garnissages structurés, c'est-à-dire la juxtaposition de plusieurs éléments unitaires agencés de manière ordonnée, par exemple des feuillets ondulés, ou des garnissages en vrac, c'est-à-dire des empilements anarchiques d'éléments unitaires, par exemple des anneaux, des spirales.

Les garnissages structurés peuvent être constitués de feuilles pliées et arrangées de manière organisée sous forme de grands blocs comme décrit par exemple dans les documents EP1029588A, US 3,679,537 et US 4,296,050. Les garnissages vracs de nouvelle génération sont généralement constitués d'éléments métalliques pourvus de perforations et des portions d'arc de formes sophistiquées.

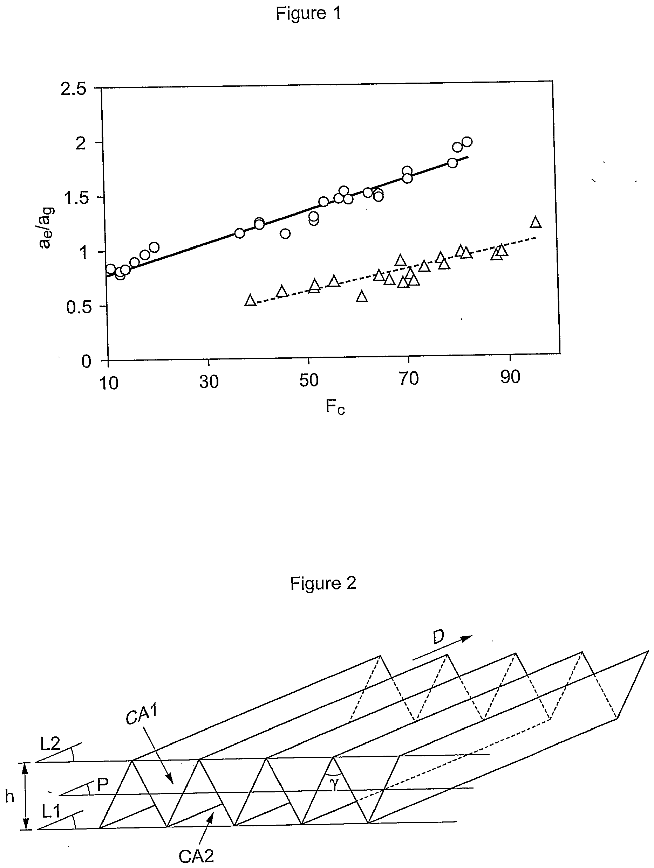

La figure 1 présente des résultats expérimentaux obtenus pour un garnissage vrac de 3^{ème} génération et un garnissage structuré. La figure 1 représente le ratio entre l'aire efficace ae et l'aire géométrique ag pour un garnissage en fonction du facteur d'engorgement Fc. L'aire efficace ae correspond à l'aire réellement disponible pour réaliser le contact gaz/liquide dans le garnissage. Les valeurs d'aire efficace sont normées par l'aire géométrique du garnissage ag, l'aire géométrique correspondant à l'aire totale développée par le garnissage. Le facteur d'engorgement Fc est le ratio entre le débit de gaz circulant au travers du garnissage et le débit de gaz correspondant à la limite d'engorgement. L'engorgement correspond à la limite de fonctionnement de la colonne de mise en contact pourvu d'un garnissage, c'est-à-dire au débit maximum de gaz que l'on peut faire passer dans la colonne pour un débit de liquide constant dans le cas d'un écoulement à contre-courant. On constate que dans le cas du garnissage vrac (valeurs marquées par les symboles ronds), le ratio ae/ag est très vite supérieur à 1 et atteint des valeurs proches de 2 lorsque l'on s'approche de l'engorgement. Ce résultat, ae/ag > 1 s'explique par le fait que le support physique du garnissage n'est pas continu. Ainsi, pour passer d'un élément à l'autre, la phase liquide doit se détacher et se fragmenter sous forme de gouttelettes, ce qui crée de la surface d'échange supplémentaire. A contrario, dans le cas d'un garnissage structuré (valeurs marquées par les symboles triangulaires), on observe que le ratio ae/ag n'atteint presque jamais la valeur 1. Ce résultat s'explique par le fait que l'écoulement de la phase liquide s'écoule sous forme d'un film liquide qui ruisselle le long du garnissage sans parvenir à le mouiller totalement. Le ratio ae/ag est donc favorable à l'utilisation de garnissages vracs pour une aire géométrique donnée. Par contre, du fait de leur organisation géométrique, les garnissages structurés développent des surfaces spécifiques, c'est-à-dire la surface géométrique du garnissage disponible par unité de volume, bien supérieures à celles des garnissages vracs, pour une même capacité hydraulique.

La présente invention vise à combiner les avantages des garnissages structurés qui sont caractérisés par une aire spécifique importante et les avantages des garnissages en vrac de la dernière génération qui sont caractérisés par une aire efficace, qui est utile au transfert de masse, bien supérieure à leur aire géométrique.

L'invention décrit un garnissage structuré construit de telle sorte que l'on retrouve les caractéristiques de garnissages en vrac induisant en particulier des détachements de liquide de la surface du garnissage et permettant de développer une aire efficace sensiblement supérieure à son aire géométrique.

De manière générale, l'invention consiste en un garnissage structuré d'une colonne d'échange de fluide définissant une surface d'échange pour au moins une phase liquide destinée à être mise en contact intime avec au moins une phase gazeuse. Le garnissage est composé d'un empilement de plaques comportant des ondulations de forme triangulaire, chaque plaque étant inscrite entre deux plans parallèles distants d'une valeur comprise entre 5 et 50 mm. Lesdites ondulations forment une succession de canaux qui comportent des ailettes inscrites entre lesdits deux plans parallèles, chacune desdites ailettes étant constituée par au moins une bande découpée dans une desdites plaques, la largeur de la bande étant comprise entre 2 et 20 mm. La bande reste solidaire de la plaque par ses deux extrémités et la bande est déformée en triangle de manière à obtenir une forme triangulaire sensiblement symétrique à sa forme initiale par rapport à un plan médian desdits deux plans et de manière à créer un orifice formant une discontinuité sur la surface de la plaque.

La surface totale des ailettes peut constituer entre 20% et 50% de la surface totale des plaques du garnissage structuré.

La direction des canaux d'une plaque forme un angle compris entre 20° et 90° par rapport à la direction des canaux d'une plaque adjacente.

Chaque ailettes peut comporter un sommet distant d'au moins 2 mm desdits deux plans.

Chaque extrémité de la bande peut former un angle compris entre 85° et 95° avec ladite plaque.

Les ailettes réparties le long d'un canal peuvent avoir des formes différentes.

La bande peut être de forme allongée dont la direction principale peut être orientée selon un angle sensiblement égal à 90° par rapport à la direction des canaux.

Les plaques peuvent comporter au moins l'un des matériaux choisis parmi les matériaux métalliques, les matériaux polymères thermoplastiques et les matériaux polymères thermodurcissables.

L'invention concerne également une colonne de mise en contact de fluide comportant plusieurs blocs comprenant des garnissages structurés selon l'invention, dans laquelle ladite direction des canaux des garnissages est orientée selon un angle compris entre 10° et 75° par rapport à l'axe de la colonne et dans laquelle les plans médians du garnissage structuré d'un desdits blocs forment un angle compris entre 20° et 90° par rapport aux plans médians des blocs adjacents.

La colonne de mise en contact selon l'invention peut être appliquée à la désacidification d'un gaz naturel, la décarbonatation des fumées ou le traitement des gaz de queue d'un procédé Claus.

Les structures de garnissage selon l'invention permettent un gain de capacité pour passer des débits, de gaz ou de liquide ou des deux fluides, plus importants dans la colonne de mise en contact. Ce gain en capacité peut être utilisé dans les cas de "revamping" pour augmenter les débits de fonctionnement de colonnes de mise en contact existantes par remplacement des garnissages internes de ces colonnes par de nouveaux garnissages selon l'invention. Cela permet d'éviter la construction de nouvelle colonne. Dans le cas de nouvelles installations, les garnissages selon l'invention permettent de diminuer le diamètre des colonnes de mise en contact et/ou de diminuer la hauteur de garnissage et, donc, la taille de la colonne. Dans les deux cas, on vise à obtenir une réduction des coûts d'investissement.

Par ailleurs, les structures de garnissage selon l'invention permettent un gain en efficacité, c'est-à-dire qu'elles maximisent l'aire, par unité de volume, réellement disponible pour réaliser le contact gaz/liquide. Ce gain en efficacité permet de diminuer la hauteur de garnissage nécessaire pour une performance donnée et donc un gain sur la taille de la colonne de mise en contact.

De plus, le gain en capacité des garnissages selon l'invention peut également avoir des répercussions sur les coûts de fonctionnement. En effet, dans certaines applications, comme l'absorption réactive mise en oeuvre notamment pour la désacidification des gaz de queue du traitement Claus, le bon fonctionnement de la colonne de mise en contact est assuré par une valeur minimale du débit de liquide par unité de surface. L'utilisation d'un garnissage structuré selon l'invention permet, pour un débit de gaz donné, de réduire le diamètre de la colonne. Le maintien d'un débit de liquide par unité de surface constant permet donc de diminuer le débit total de liquide. En conséquence, les coûts opératoires associés à la circulation du liquide sont donc diminués.

D'autres caractéristiques et avantages de l'invention seront mieux compris et apparaîtront clairement à la lecture de la description faite ci-après en se référant aux dessins parmi lesquels :
- la figure 1 présente un diagramme comparant des caractéristiques d'un garnissage structuré et d'un garnissage en vrac,
- la figure 2 schématise une plaque avec des ondulations triangulaires,
- la figure 3 montre une bande découpée dans un canal d'une plaque ondulée,
- les figures 4A et 4B représentent des canaux pourvus d'ailettes de différentes formes,
- la figure 5 schématise une plaque ondulée pourvues d'ailettes de forme triangulaire,
- la figures 6 schématise un garnissage structuré,
- la figure 7 schématise une colonne de mise en contact,
- la figure 8 représente un assemblage de garnissages structurés.

La figure 2 représente une feuille ou plaque ondulée qui constitue la base du garnissage structuré selon l'invention. Les ondulations sont encadrées entre deux plans parallèles L1 et L2 relativement proches. La distance h séparant L1 de L2 peut être comprise entre 5 mm et 50 mm, de préférence supérieure à 7 mm, et de préférence comprise entre 7 mm et 20 mm. Le plan méridien P partage l'espace entre L1 et L2 en deux parties égales. Sur la figure 2, les ondulations sont en forme de triangle et sont réparties de part et d'autre du plan méridien P : une partie des ondulations étant située d'un côté du plan P, l'autre partie des ondulations étant située de l'autre côté du plan P. De préférence, les sommets des triangles forment un angle γ compris entre 85° et 95°. Les ondulations forment une succession de canaux qui s'étendent dans la direction marquée par la flèche D. Le canal CA1 est situé en dessous du plan P. Le canal CA2 contigu au canal CA1 est situé au dessus du plan P. De préférence, on choisit des ondulations qui génèrent des canaux qui touchent les plans L1 et L2, sans sortir de l'espace délimité par ces deux plans. Ainsi, les feuilles ondulées occupent une surface maximum dans la tranche plane définie par les plans L1 et L2.

Les feuilles ondulées peuvent être obtenues par emboutissage à froid ou à chaud, par pliage ou par formage à chaud d'une feuille plane. Les feuilles ondulées peuvent également être obtenues par extrusion à travers une filière.

De préférence, on réalise les feuilles ondulées en métal, par exemple en acier car c'est un matériau qui présente une bonne tenue mécanique et qui est disponible à bon marché. Cependant, on peut également réaliser les feuilles ondulées en matériau polymère, thermoplastique ou thermodurcissable, éventuellement chargé de fibre de verre, de carbone ou d'aramide.

On peut utiliser des plaques dont la surface est lisse, on peut également utiliser des plaques dont la surface est gaufrée, c'est-à-dire une surface qui présente des aspérités dont la plus grande dimension est inférieur à 3 mm, voire 1 mm.

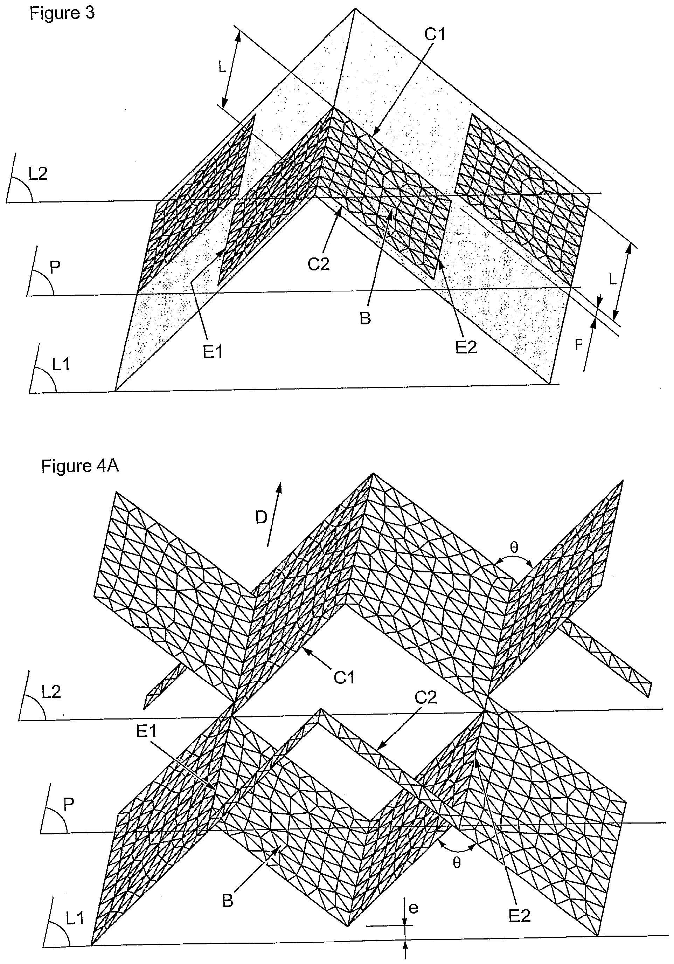

Selon l'invention, on modifie les feuilles ondulées pour former des ailettes qui créent des discontinuités de surface desdites feuilles. La figure 3 représente une portion d'un canal d'une plaque ondulée. Une bande B a été découpée selon les entailles C1 et C2. La bande B reste solidaire de la plaque au niveau de ses extrémités E1 et E2.

Sur la figure 3, la bande B est située au dessus du plan méridien P. La bande B peut avoir différentes formes, par exemple rectangulaire ou trapézoïdale. Selon l'invention, la bande B a été déformée de manière à créer une discontinuité de la surface de la feuille au niveau des entailles C1 et C2. Chaque discontinuité constitue une ouverture dans la plaque ondulée. Le fait que l'ailette soit continue et solidaire par ses deux extrémités E1 et E2 à la plaque ondulée permet de minimiser la possibilité de faire des ponts par effet capillaire, où du liquide se serait pas renouvelé.

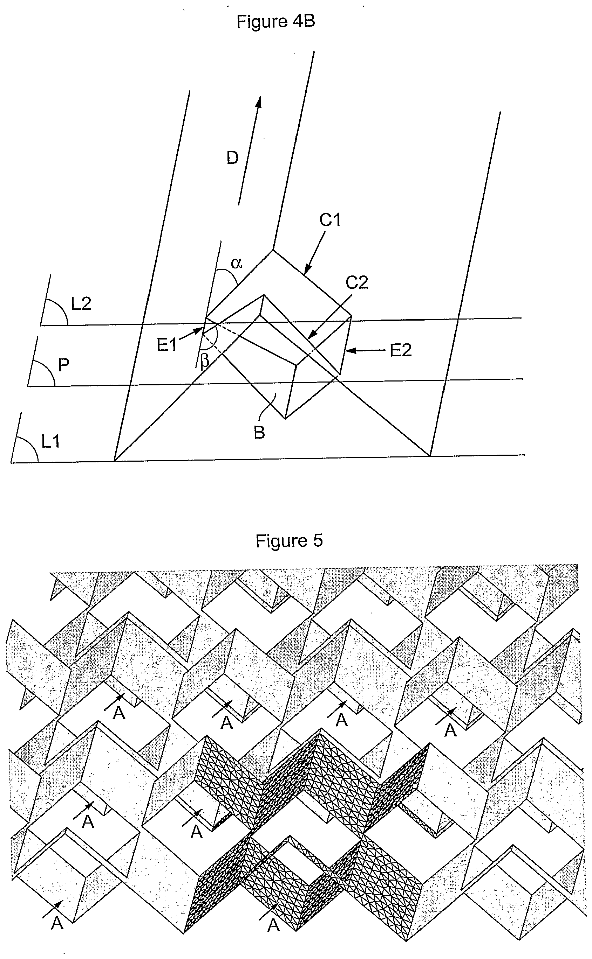

Les figures 4A et 4B représentent une bande B qui a été déformée. La déformation est limitée par le fait que la bande ne sort pas de l'espace situé entre les plans L1 et L2. Ainsi la feuille ondulée n'occupe que l'espace disponible entre ces deux plans L1 et L2 et peut sans problème être empilée sur une autre feuille ondulée présentant les mêmes caractéristiques. On déforme la bande B de manière à ce qu'elle soit positionnée en dessous du plan P, dans les positions représentées par les figures 4A et 4B. En d'autres termes, la bande B est déformée de manière à ce qu'au moins une partie de la bande franchisse le plan P. Après déformation, la bande B est située du coté du plan P opposé au côté où était positionnée la bande B dans sa position initiale. L'ailette constituée d'une bande déformée est située au moins en partie du coté opposé, par rapport au plan P, à la position du canal dans lequel la bande a été découpée. Ainsi, les ailettes occupent l'espace libre des canaux formés par les ondulations et augmentent la surface du garnissage qui est effectivement utile à la mise en contact des fluides. La figure 4A et 4B représente une bande B déformée de manière à épouser une forme triangulaire sensiblement symétrique à sa forme initiale, par rapport au plan méridien P.

De préférence, les sommets des triangles formés par les ailettes ne touchent pas les plans L1 et L2 afin de minimiser les points de contact entre deux plaques adjacentes. Les sommets peuvent être distants d'une valeur e d'au moins 2 mm, voire de 4 mm des plans L1 et L2.

Dans un plan perpendiculaire à la direction D des canaux, au niveau des attaches E1 et E2 des ailettes, la surface de l'ailette forme un angle θ avec la plaque. Selon l'invention, l'angle θ est compris entre 85° et 95°, en général θ est environ égal à 90°.

De préférence, la surface des ailettes a une direction parallèle à la direction D des canaux. Ainsi, les ailettes n'entravent pas ou s'opposent au minimum, à l'écoulement des fluides dans les canaux des plaques ondulées. Cela participe à minimiser la perte de charge des fluides traversant un garnissage structuré comportant ces plaques.

La feuille ondulée pourvue d'ailettes selon l'invention développe la même aire géométrique spécifique que la même feuille ondulée sans ailette, puisqu'il n'y a pas de retrait de matière lors de la création des ailettes. Ainsi, un garnissage structuré selon l'invention développe la même aire géométrique qu'un garnissage structuré standard. La présence des ailettes dans le garnissage structuré selon l'invention force le film liquide s'écoulant à la surfaces des canaux, à s'écouler sous forme de goutte au niveau des ruptures de surface créées par la présence des ailettes. Ainsi, les ailettes maximisent la surface utile au contact entre le gaz et le liquide circulant dans le garnissage structuré selon l'invention.

Par ailleurs, les ailettes assurent une bonne agitation de l'écoulement de gaz, ce qui est favorable au transfert de masse entre le gaz et le liquide qui sont mis en contact dans le garnissage structuré selon l'invention. Pour favoriser l'agitation, on prévoit que la forme d'une ailette est différente de celle des ailettes adjacentes le long d'un même canal. L'alternance de forme des ailettes le long d'un canal participe activement à l'agitation de l'écoulement et au mélange des phases en circulation le long du canal.

Pour effectivement créer une rupture du film liquide, on oriente les entailles permettant de former les ailettes, d'un angle compris entre 20° et 90° par rapport à la direction D des canaux. De préférence, les ailettes forment une bande dont les bords forment un angle sensiblement égal à 90°, comme représenté sur la figure 4A. Ces entailles peuvent être sensiblement parallèles. En référence à la figure 4B, la bande B a été découpée dans une plaque selon deux entailles C1 et C2 qui ne sont pas parallèles. L'entaille C1 forme un angle α de 90° par rapport à la direction D du canal, l'entaille C2 forme un angle β de 70° par rapport à la direction D du canal.

Pour que les ailettes jouent pleinement leur rôle, la largeur L des bandes B est supérieure à 2 mm, de préférence supérieure à 4 mm, afin d'éviter les phénomènes de capillarité qui obtureraient les orifices formés à la surface des canaux par les bandes B déformées. Pour favoriser un écoulement sous forme de film liquide à la surface des canaux et un écoulement sous forme de gouttes dans l'espace libre laissé par les bandes déformées, on peut prévoir que la largeur des bandes B soient inférieures à 20 mm, de préférence inférieure à 15 mm. La plaque ondulée est réalisée avec un espace minimum entre les ailettes. De préférence, on laisse un espace A compris entre 0 et 5 mm entre deux ailettes, l'espace A étant mesurée dans la direction des canaux. La surface totale des ailettes, c'est-à-dire la surface des bandes B découpées dans les feuilles ondulées peut être supérieure à 20%, et de préférence inférieure à 50% de la surface totale de la feuille, afin d'obtenir de bonnes performances. Une excellente valeur de la surface totale des ailettes est comprise entre 40% et 50% de la surface totale de la plaque.

La figure 5 donne un exemple de feuille ondulée pourvue d'une multitude d'ailettes A présentant un profil triangulaire, semblables à celles décrites en référence à la figure 4A. Sur une feuille ondulée, les ailettes peuvent être identiques afin d'optimiser et de faciliter le procédé de fabrication.

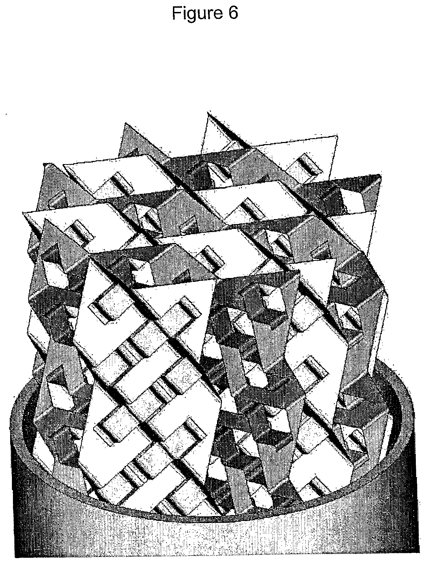

Les feuilles ondulées pourvues d'ailettes sont empilées de manière à former un garnissage structuré. De préférence, la direction des canaux d'une feuille ondulée est décalée par rapport à la direction des canaux des feuilles adjacentes, par exemple d'un angle compris entre 20° et 90°, de préférence d'un angle ayant une valeur sensiblement proche de 90°. La figure 6 représente un garnissage structuré composé de feuilles ondulées selon un motif triangulaire.

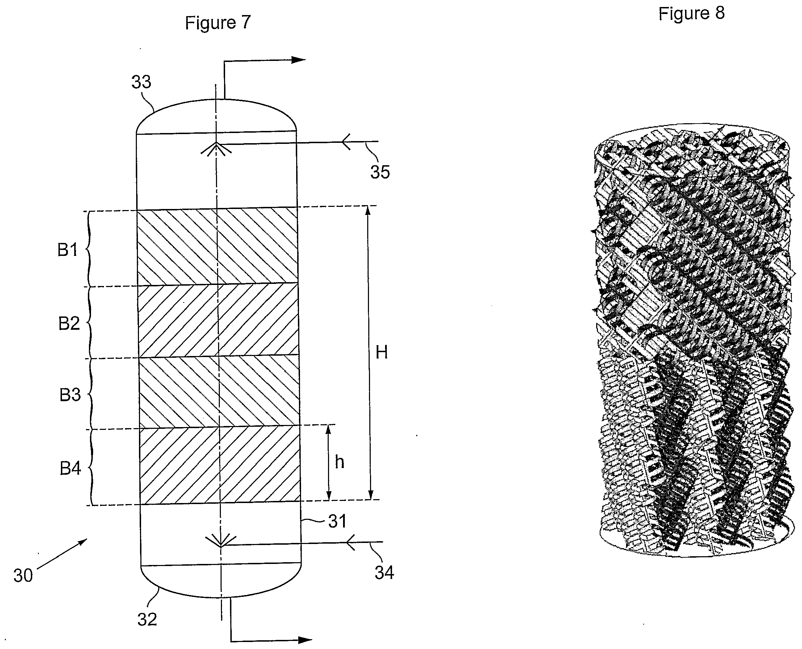

La figure 7 représente une colonne de mise en contact 30 constituée d'une enceinte cylindrique 31 fermée par les pièces de fond 32 et 33. Un fluide, par exemple du gaz, est introduit en fond de la colonne par le conduit 34. Un autre fluide, par exemple du liquide, est introduit en tête de la colonne par le conduit 35. Ces deux fluides entrent en contact dans l'espace situé entre les alimentations de la colonne par les conduits 34 et 35. Pour améliorer la mise en contact et favoriser le transfert de matière et de chaleur, la colonne 30 est pourvue de garnissage interne sur la hauteur H pouvant atteindre plusieurs dizaines de mètres. Selon l'invention, le garnissage structuré est composé de feuilles ondulées munies d'ailettes, par exemple décrites en référence à la figure 5 et disposées par exemple selon un arrangement décrit en référence à la figure 6. De préférence, selon l'invention, on utilise un garnissage composé de plusieurs blocs B1, B2, B3 et B4 dans lesquels les canaux sont orientés différemment d'un bloc à l'autre. En général, les plaques constituant les garnissages structurés sont disposées de manière à ce que la direction des canaux formés par les ondulations forme un angle compris entre 10° et 75° par rapport à la verticale, une excellente valeur de cet angle étant comprise entre 20° et 45°. De plus, les plaques d'un bloc sont décalées par rapport aux blocs adjacents. En général, les plans méridiens des plaques d'un bloc forment un angle compris entre 20° et 90°, souvent égal à 90° par rapport aux plans méridiens des plaques constituant un bloc adjacent. La figure 8 représente deux blocs adjacents formés de plaques comportant des ondulations triangulaires. Le bloc de garnissage structuré inférieur est composé de plaques décalées de 90° par rapport aux plaques du bloc de garnissage structuré supérieur. De plus, en référence à la figure 7, on peut limiter la hauteur h d'un bloc à une valeur limite, par exemple comprise entre 50 et 500 mm, et de préférence entre 100 et 400 mm pour l'introduction des blocs dans l'enceinte cylindrique lors de l'assemblage de la colonne. Cette alternance d'orientation des canaux des différents blocs, associée à une hauteur limitée de chacun des blocs, permet de redistribuer le liquide en permanence en évitant de privilégier une direction d'écoulement. Ainsi, on évite de concentrer le liquide sur la paroi interne de l'enceinte 31, ce qui provoquerait une diminution de l'aire de contact.

Le garnissage selon l'invention peut être mis en oeuvre pour la désacidification d'un gaz naturel, la décarbonatation des fumées et le traitement des gaz de queue d'un procédé Claus. Dans ces applications, le gaz à traiter est mis en contact avec une solution absorbante liquide dans une colonne de mise en contact munie d'un garnissage selon l'invention.

L'exemple numérique ci-après permet de comparer un garnissage structuré selon l'invention par rapport aux garnissages structurés et aux garnissages en vrac de l'art antérieur.

Les garnissages sont mis en oeuvre dans un procédé de désacidification d'un gaz comportant 10% vol. de CO₂. Le gaz à traiter ayant un débit de 350 000 Nm³/h, est mis en contact avec une solution aqueuse d'amines dans une colonne comportant un garnissage interne. On dimensionne la colonne d'absorption de manière à pouvoir absorber 90% du CO₂. On compare les résultats obtenus par une colonne munie d'un garnissage structuré selon l'invention, une colonne munie d'un garnissage structuré selon l'art antérieur (garnissage MELLAPAK 250.Y commercialisé par la société Sulzer-Chemtech) et une colonne munie d'un garnissage en vrac selon l'art antérieur (garnissage IMTP50 commercialisé par la société Koch Glitsch). Les trois garnissages sont choisis de manière à offrir la même capacité hydraulique. Ainsi, on peut fixer un diamètre de colonne identique pour les trois garnissages. Dans ce cas, seule la hauteur de garnissage dans la colonne joue un rôle sur les performances de la colonne de mise en contact.

On détermine la hauteur de garnissage nécessaire pour chacun des trois cas afin d'absorber 90% du CO₂ contenu dans le gaz. Les résultats sont mentionnés dans le tableau 1.

| | ag (m²/m³) | ae (m²/m³) | ae/ag | hauteur (m) |
|---|---|---|---|---|
| Garnissage en vrac (art antérieur) | 120 | 212,4 | 1,77 | 26,2 |
| Garnissage structuré (art antérieur) | 250 | 230 | 0,92 | 24,2 |
| Garnissage structuré selon l'invention | 180 | 270 | 1,5 | 20,6 |

On observe que le remplacement des garnissages actuels par des garnissages selon l'invention permet un gain de volume de 15 % par rapport au cas du garnissage structuré, et jusqu'à 21% par rapport au cas du garnissage en vrac.

## Revendications

1. Garnissage structuré d'une colonne d'échange de fluide définissant une surface d'échange pour au moins une phase liquide destinée à être mise en contact intime avec au moins une phase gazeuse, ledit garnissage étant composé d'un empilement de plaques comportant des ondulations de forme triangulaire, chaque plaque étant inscrite entre deux plans parallèles (L1 ; L2) distants d'une valeur (h) comprise entre 5 et 50 mm, lesdites ondulations formant une succession de canaux qui comportent des ailettes (A) inscrites entre lesdits deux plans parallèles, chacune desdites ailettes étant constituée par au moins une bande (B) découpée dans une desdites plaques selon deux entailles (C1 ; C2), la largeur (L) de la bande étant comprise entre 2 et 20 mm, la bande restant solidaire de la plaque par ses deux extrémités (E1 ; E2) et la bande étant déformée en triangle de manière à obtenir une forme triangulaire sensiblement symétrique à sa forme initiale par rapport à un plan médian (P) desdits deux plans (L1 ; L2) et de manière à créer un orifice formant une discontinuité sur la surface de la plaque, les ailettes adjacentes situées sur deux canaux contigus et constituées de bandes déformées dans des directions opposées par rapport au plan médian (P) étant séparées par un espace (F), ledit espace (F) étant mesuré dans la direction (D) des canaux, et les entailles (C1 ; C2) des ailettes étant orientées d'un angle compris entre 20° et 90° par rapport à la direction (D) des canaux.

2. Garnissage selon la revendication 1, dans lequel la surface totale des ailettes constitue entre 20% et 50% de la surface totale des plaques du garnissage structuré.

3. Garnissage selon l'une des revendications précédentes, dans lequel la direction (D) des canaux d'une plaque forme un angle compris entre 20° et 90° par rapport à la direction (D) des canaux d'une plaque adjacente.

4. Garnissage selon l'une des revendications précédentes, dans lequel chaque ailettes comporte un sommet distant d'au moins 2 mm desdits deux plans.

5. Garnissage selon l'une des revendications précédentes, dans lequel chaque extrémité de la bande forme un angle compris entre 85° et 95° avec ladite plaque.

6. Garnissage selon l'une des revendications précédentes, dans lequel les ailettes (A) réparties le long d'un canal ont des formes différentes.

7. Garnissage selon l'une des revendications précédentes, dans lequel la bande (B) est de forme allongée dont la direction principale est orientée selon un angle sensiblement égal à 90° par rapport à la direction des canaux.

8. Garnissage selon l'une des revendications précédentes, dans lequel les plaques comportent au moins l'un des matériaux choisis parmi les matériaux métalliques, les matériaux polymères thermoplastiques et les matériaux polymères thermodurcissables.

9. Colonne de mise en contact de fluide comportant plusieurs blocs (B1-B4) comprenant des garnissages structurés selon l'une des revendications précédentes, dans laquelle ladite direction des canaux des garnissages est orientée selon un angle compris entre 10° et 75° par rapport à l'axe de la colonne et dans laquelle les plans médians du garnissage structuré d'un desdits blocs forment un angle compris entre 20° et 90° par rapport aux plans médians des blocs adjacents.

10. Application d'une colonne de mise en contact selon la revendication 9 à la désacidification d'un gaz naturel, la décarbonatation des fumées ou le traitement des gaz de queue d'un procédé Claus.

## Patentansprüche

1. Strukturierte Packung einer Fluidaustauschsäule, die eine Austauschoberfläche für mindestens eine flüssige Phase definiert, die dazu bestimmt ist, mit mindestens einer gasförmigen Phase in engen Kontakt zu kommen, wobei die Packung von einem Plattenstapel, umfassend Wellungen von dreieckiger Form, gebildet ist, wobei jede Platte zwischen zwei parallelen Ebenen (L1; L2) angeordnet ist, die um einen Wert (b) zwischen 5 und 50 mm entfernt sind, wobei die Wellungen eine Aufeinanderfolge von Kanälen bilden, die Flügel (A) umfassen, die zwischen den zwei parallelen Ebenen angeordnet sind, wobei jeder der Flügel von mindestens einem Streifen (B) gebildet ist, der aus einer der Platten entlang zweier Kerben (C1; C2) ausgeschnitten ist, wobei die Breite (L) des Streifens zwischen 2 und 20 mm beträgt, wobei der Streifen mit der Platte mit seinen zwei Enden (E1; E2) verbunden bleibt, und wobei der Streifen zum Dreieck verformt wird, um eine dreieckige Form im Wesentlichen symmetrisch zu seiner ursprünglichen Form in Bezug zu einer Mittelebene (P) der zwei Ebenen (L1; L2) zu erhalten, und um eine Öffnung zu erzeugen, die eine Diskontinuität auf der Oberfläche der Platte bildet, wobei die angrenzenden Flügel, die sich auf zwei aneinander anliegenden Kanälen befinden und von Streifen gebildet sind, die in entgegengesetzte Richtungen in Bezug zur Mittelebene (P) verformt sind, durch einen Raum (F) getrennt sind, wobei der Raum (F) in die Richtung (D) der Kanäle gemessen wird, und wobei die Kerben (C1; C2) der Flügel in einem Winkel zwischen 20° und 90° in Bezug zur Richtung (D) der Kanäle ausgerichtet sind.

2. Packung nach Anspruch 1, bei der die Gesamtfläche der Flügel zwischen 20 % und 50 % der Gesamtfläche der Platten der strukturierten Packung darstellt.

3. Packung nach einem der vorhergehenden Ansprüche, bei der die Richtung (D) der Kanäle einer Platte einen Winkel zwischen 20° und 90° in Bezug zur Richtung (D) der Kanäle einer angrenzenden Platte bildet.

4. Packung nach einem der vorhergehenden Ansprüche, bei der jeder Flügel einen Scheitel umfasst, der um mindestens 2 mm von den zwei Ebenen entfernt ist.

5. Packung nach einem der vorhergehenden Ansprüche, bei der jedes Ende des Streifens einen Winkel zwischen 85° und 95° mit der Platte bildet.

6. Packung nach einem der vorhergehenden Ansprüche, bei der die entlang eines Kanals verteilten Flügel (A) unterschiedliche Formen haben.

7. Packung nach einem der vorhergehenden Ansprüche, bei der der streifen (B) von länglicher Form ist, deren Hauptrichtung in einem Winkel im Wesentlichen gleich 90° in Bezug zur Richtung der Kanäle ausgerichtet ist.

8. Packung nach einem der vorhergehenden Ansprüche, bei der die Platten mindestens eines der Materialien umfassen, das unter den metallischen Materialien, den thermoplastischen Polymermaterialien und den duroplastischen Polymermaterialien ausgewählt ist.

9. Fluidkontaktsäule, umfassend mehrere Blöcke (B1-B4), umfassend strukturierte Packungen nach einem der vorhergehenden Ansprüche, bei der die Richtung der Kanäle der Packungen in einem Winkel zwischen 10° und 75° in Bezug zur Achse der Säule ausgerichtet ist, und bei der die Mittelebenen der strukturierten Packung eines der Blöcke einen Winkel zwischen 20° und 90° in Bezug zu den Mittelebenen der angrenzenden Blöcke bilden.

10. Anwendung einer Kontaktsäule nach Anspruch 9 für die Entsäuerung eines Erdgases, die Entkarbonisierung der Rauchgase oder die Behandlung der Endgase eines Claus-Verfahrens.

## Claims

1. Structured packing of a fluid exchange column defining an exchange surface for at least one liquid phase intended to be placed in intimate contact with at least one ascending gaseous phase, said packing comprising a stack of plates having triangular undulations, each plate being contained between two parallel planes (L1, L2) at a distance of a value (h) between 5 and 50 mm, said undulations forming a series of channels which have wings (A) contained between said two parallel planes, each of said wings being composed of a strip (B) punched out in one of said channels according to two grooves (C1) and (C2), the width (L) of the strip being between 2 and 20 mm, the strip being fixed to the plate by its two ends (E1, E2) and the strip being triangle shaped in such a fashion to obtain a triangular form more or less symmetrical to the initial form with respect to a central plane (P) of said two planes (L1, L2) and in such a fashion as to create an orifice forming a discontinuity on the surface of the plate, the adjacent wings located on two contiguous channels and consisting of deformed strips in opposite directions relative to the central plane (P) being separated by a space (F), said space (F) is measured in the direction (D) of the channels, and the grooves (C1) and (C2) of the wings are oriented along an angle comprised between 20° and 90° relative to the direction (D) of the channels.

2. Packing according to Claim 1, wherein the total surface of the wings comprises between 20% and 50% of the total surface of the plates of the structured packing.

3. Packing according to one of the previous claims, wherein the direction (D) of the channels of a plate forms an angle between 20° and 90° with respect to the direction (D) of the channels of an adjacent plate.

4. Packing according to one of the previous claims, wherein the each wing has an apex at a distance of at least 2 mm from said two planes.

5. Packing according to one of the previous claims, wherein each end of the strip forms an angle of between 85° and 95° with said plate.

6. Packing according to one of the previous claims, wherein the wings (A) arranged along a channel have different shapes.

7. Packing according to one of the previous claims, wherein the strip (B) has an elongated shape whose principal direction is oriented along an angle more or less equal to 90⁰ with respect to the direction of the channels.

8. Packing according to one of the previous claims, wherein the plates are made of at least one of the following materials: metallic materials, thermoplastic materials and thermosetting polymer materials.

9. Fluid exchange column comprising a plurality of blocks (B1-B4) comprising structured packing according to one of the previous claims, in which said direction of the channels of the packings is oriented according to an angle of between 10⁰ and 75⁰ with respect to the axis of the column and in which the central planes of the structured packing of one of said blocks form an angle of between 20⁰ and 90⁰ with respect to the central planes of the adjacent blocks.

10. Application of a contact column according to Claim 9 to the deacidification of a natural gas, the decarbonation of smoke or the tail gas treatment of a Claus process.
